# DEMANDE DE BREVET EUROPEEN

(11) **EP 1 359 551 A1**
(43) Date de publication de la demande: **05.11.2003**
(21) Numéro de dépôt: 02354189.9
(22) Date de dépôt: 29.11.2002
(51) Int. Cl.: G07F 7/10

(54) **Génération de quantités secrètes d'identification d'un circuit intégré**

(30) Priorité: 30.11.2001 FR 0115529
(71) Demandeur: STMicroelectronics S.A., 92120 Montrouge (FR)
(72) Inventeur: Wuidart, Luc, 83910 Pourrieres (FR); Bardouillet, Michel, 13790 Rousset (FR); Plaza, Laurent, 13710 Fuveau (FR)
(74) Mandataire: de Beaumont, Michel

(57) **Abrégé**

L'invention concerne un procédé et un circuit de génération d'une quantité secrète (KEY) à partir d'un identifiant d'un circuit intégré (2), dans lesquels on génère un premier mot numérique à partir d'un réseau de paramètres physiques sensibles aux dispersions technologiques et de procédé de fabrication du circuit intégré dont ils constituent une signature (3), et on soumet ce premier mot à au moins un registre à décalage à rétroaction linéaire (6), la sortie dudit registre à décalage constituant ladite quantité secrète.

## Description

La présente invention concerne l'utilisation d'une quantité secrète issue d'un circuit intégré ou d'un élément de sous-ensemble électronique contenant un tel circuit. Par exemple, l'invention concerne l'utilisation d'une telle quantité secrète par des programmes en tant que clé de chiffrement, en tant que quantité secrète d'un processus d'identification ou d'authentification du circuit intégré. L'invention concerne plus particulièrement l'utilisation d'un identifiant numérique d'une puce de circuit intégré issu d'un réseau de paramètres physiques liés à la fabrication de la puce de circuit intégré.

L'utilisation d'un identifiant issu d'un réseau de paramètres physiques, par exemple, pour authentifier une puce de circuit intégré ou pour chiffrer une donnée qu'elle fournit, est de plus en plus recherchée dans la mesure où cela permet d'utiliser un mot binaire caché ou enfoui dans le circuit intégré sans devoir pour autant le stocker à demeure dans un élément de mémorisation piratable. On améliore ainsi la fiabilité du système contre des fraudes éventuelles. De plus, le recours à un réseau de paramètres physiques permet d'obtenir des identifiants numériques distincts les uns des autres pour différentes puces de circuit intégré issues d'une fabrication donnée.

Généralement, l'identifiant numérique du circuit intégré est fourni à l'extérieur du circuit après avoir été le cas échéant codé ou brouillé pour être transmis vers un système distant. Ce dernier exploite le mot qu'il reçoit, généralement sans avoir à connaître l'identifiant.

Un exemple d'application de l'invention concerne le domaine des cartes à puce utilisées pour des transactions financières à partir d'unités de compte prépayées ou non, que la transmission soit avec ou sans contact avec le lecteur de carte à puce.

Un autre exemple d'application concerne les systèmes de transmission de données utilisant un décodeur personnalisé côté utilisateur. Dans un tel cas, le décodeur peut comprendre un circuit d'authentification exploitant un identifiant issu d'un réseau de paramètres physiques d'un circuit intégré qu'il contient. Par analogie avec les lecteurs de carte à puce utilisés dans les systèmes de paiement, cela revient au même que si l'on combine un lecteur avec sa carte à puce chez l'utilisateur, l'authentification restant faite par un système différent du lecteur.

Un inconvénient du recours à un identifiant d'un circuit intégré issu d'un réseau de paramètres physiques est lié à son caractère individuel et immuable.

Ainsi, dans le cas où l'identifiant ou un mot numérique (quantité d'authentification ou clé de chiffrement) contenant cet identifiant parvient à être piraté par un fraudeur, il n'existe plus d'autres solutions que de changer le circuit intégré. En effet, à partir du moment où l'on suspecte que l'identifiant a été piraté, il est souhaitable dans les applications sécurisées de ne plus utiliser cet identifiant. Ce phénomène est généralement connu sous le nom de révocation d'une clé de chiffrement ou d'un authentifiant, ou plus généralement d'une quantité secrète.

L'absence de solution à la révocation d'une clé ou quantité secrète basée sur l'utilisation d'un réseau de paramètres physiques d'un circuit intégré limite actuellement l'utilisation de ces identifiants qui sont pour le reste très avantageux.

La présente invention vise à pallier les inconvénients connus de l'utilisation d'un identifiant numérique issu d'un réseau de paramètres physiques dans un circuit intégré.

L'invention vise, plus particulièrement, à permettre la révocation d'une quantité ou clé secrète basée sur un identifiant issu d'un réseau de paramètres physiques sans pour autant qu'il soit nécessaire de changer le circuit intégré concerné.

On pourrait penser multiplier le nombre de réseaux de paramètres physiques pour multiplier le nombre d'identifiants numériques possibles en cas de révocation. Une telle solution présente toutefois l'inconvénient d'être encombrante dans le circuit intégré. De plus, le nombre d'identifiants possibles reste très limité.

En outre, on peut rechercher une taille de quantité secrète qui soit supérieure à la taille du mot issu du réseau de paramètres physiques.

Un autre objet de la présente invention est de proposer une solution qui ne supprime pas le caractère individuel de l'identifiant du circuit intégré au moyen d'un réseau de paramètres physiques.

L'invention vise également à proposer une solution qui soit compatible avec la miniaturisation des circuits intégrés.

L'invention vise également à proposer une solution qui soit transparente côté système d'exploitation de la quantité secrète, c'est-à-dire qui ne nécessite pas que celui-ci connaisse les moyens utilisés pour rendre plus sûre la quantité secrète.

Pour atteindre ces objets et d'autres, la présente invention prévoit un procédé de génération d'une quantité secrète à partir d'un identifiant d'un circuit intégré, comprenant les étapes suivantes :
générer un premier mot numérique à partir d'un réseau de paramètres physiques ; et
soumettre ce premier mot à au moins un registre à décalage à rétroaction, la sortie dudit registre à décalage constituant ladite quantité secrète.

Selon un mode de mise en oeuvre de la présente invention, on soumet le premier mot à plusieurs registres à décalage à rétroaction, et on sélectionne l'un de ces registres pour constituer la quantité secrète.

Selon un mode de mise en oeuvre de la présente invention, la sélection est destinée à être modifiée suite à une révocation d'une quantité secrète précédente.

Selon un mode de mise en oeuvre de la présente invention, le ou les registres à décalage sont à rétroaction linéaire.

Selon un mode de mise en oeuvre de la présente invention, on sélectionne un registre à décalage parmi plusieurs au moyen d'un sélecteur.

L'invention prévoit également un circuit de génération d'une quantité secrète interne à un circuit intégré, comportant :
un générateur d'un premier mot numérique propre à la puce de circuit intégré basé sur un réseau de paramètres physiques ;
au moins un registre à décalage à rétroaction destiné à recevoir en entrée le premier mot et à fournir ladite quantité ; et
un sélecteur de la séquence de dérivation du registre à décalage, programmable au moyen d'un compteur.

L'invention prévoit également un circuit de génération d'une quantité secrète interne à un circuit intégré, comportant :
un générateur d'un premier mot numérique propre à la puce de circuit intégré et basé sur un réseau de paramètre physique ;
plusieurs registres à décalage à rétroaction destinés à recevoir en entrée le premier mot binaire ; et
un sélecteur d'un des registres à décalage pour fournir ladite quantité secrète.

Selon un mode de réalisation de la présente invention, la sélection opérée par le sélecteur est destinée à être modifiée en cas de révocation de quantité secrète.

Selon un mode de réalisation de la présente invention, le sélecteur est constitué d'un multiplexeur de sélection d'une entrée ou sortie parmi les entrées/sorties des registres à décalage.

Selon un mode de réalisation de la présente invention, des registres de stockage du premier mot et de la quantité secrète sont des registres temporaires, le circuit comprenant des moyens pour réinitialiser ces éléments de mémorisation temporaire après une durée prédéterminée.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 représente, de façon très schématique et sous forme de bloc un mode de réalisation d'un circuit de génération d'une quantité secrète selon la présente invention ;
la figure 2 représente le schéma bloc général d'un registre à décalage à rétroaction linéaire utilisé dans le circuit de la figure 1 ; et
la figure 3 représente un exemple simplifié d'un registre à décalage à rétroaction linéaire de quatre bits, dérivé au premier et au quatrième bit.

Pour des raisons de clarté, seuls les éléments du circuit intégré qui sont nécessaires à la compréhension de l'invention ont été représentés aux figures et seront décrits par la suite. En particulier, les constituants du circuit intégré ou de l'élément sous-ensemble électronique qui ne font pas partie de la génération de la quantité secrète au moyen du réseau de paramètres physiques caractéristique de l'invention n'ont pas été illustrés et ne font pas l'objet de l'invention. De plus, l'exploitation de la quantité secrète (par exemple par un processus d'authentification ou de chiffrement) qu'elle soit interne ou externe au circuit intégré n'a pas été détaillée, l'invention s'appliquant à tout processus classique.

Une caractéristique de la présente invention est d'associer à un réseau de paramètres physiques fournissant un premier mot numérique lié à la fabrication d'un circuit intégré, au moins un registre à décalage, de préférence à rétroaction linéaire, et d'utiliser le mot numérique fourni par ce registre à décalage pour constituer la quantité secrète du circuit intégré.

Selon l'invention, plusieurs registres à décalage à rétroaction linéaire sont fonctionnellement utilisés. On peut soit multiplier le nombre de registres physiquement dans la cellule de génération du circuit intégré soit prévoir un seul registre dont on paramètre les différentes dérivées des bits comme on le verra par la suite.

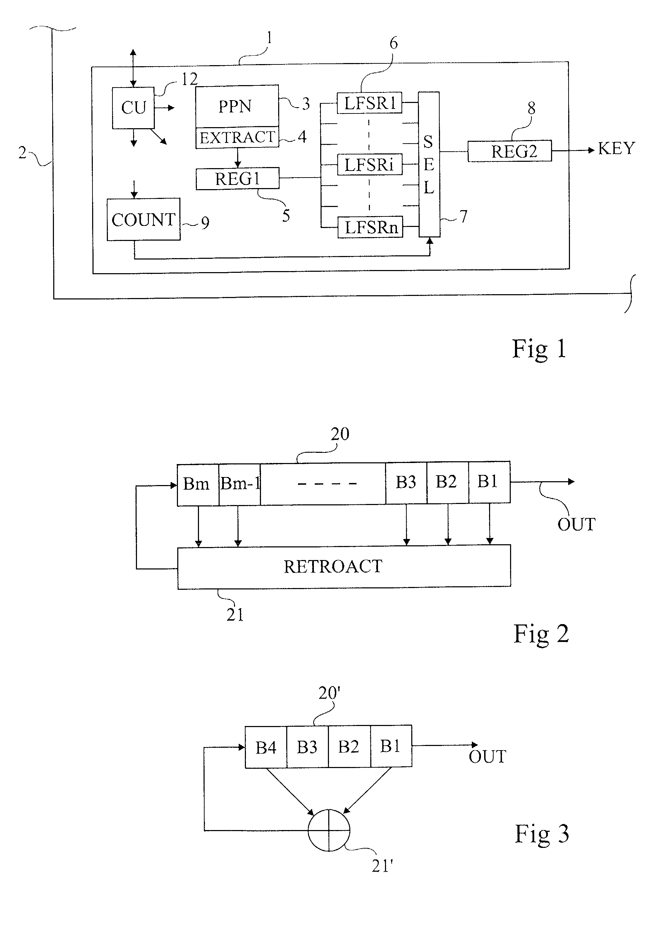

La figure 1 représente, par une vue très schématique et sous forme de blocs, un mode de réalisation d'une cellule 1 de génération d'une quantité secrète (KEY) d'un circuit intégré 2.

La cellule 1 comporte essentiellement un réseau de paramètres physiques 3 (PPN) lié à la fabrication de la puce du circuit intégré. Ce réseau de paramètres physiques 3 fournit un grand nombre de signaux et est associé à un circuit 4 d'extraction d'un mot binaire représentatif du réseau de paramètres physiques et stocké temporairement dans un élément de mémorisation 5 (REG1).

On pourra utiliser n'importe quel réseau de paramètres physiques classique, par exemple consistant à mesurer des paramètres électriques. Il pourra s'agir, par exemple, d'une mesure d'une tension seuil d'un transistor, d'une mesure d'une résistance ou d'une mesure de capacité parasite, d'une mesure de courant produit par une source de courant, d'une mesure de constante de temps (par exemple, un circuit intégré) d'une mesure d'une fréquence d'oscillation, etc. Comme ces caractéristiques sont sensibles aux dispersions technologiques et de procédé de fabrication, on peut considérer que le ou les paramètres électriques pris en compte sont propres à la fabrication et constituent une signature du circuit intégré correspondant.

Dans l'exemple d'une mesure de paramètres électriques, les signaux sont convertis en signaux numériques au moyen d'un convertisseur analogique-numérique qui comprend le circuit d'extraction 4 et sont le cas échéant multiplexés pour constituer le mot numérique stocké dans le registre 5.

En guise de réseau de paramètres physiques, on pourra également recourir à des circuits faisant appel à une mesure temporelle. Par exemple, on mesure le temps de lecture/écriture d'une mémoire de type EEPROM. Un exemple de réseau de paramètres physiques de ce type est décrit dans le brevet américain n° 5818728.

On pourra encore utiliser un réseau de paramètres physiques à base de bascules tel que décrit dans la demande de brevet français n° 0104585 de la demanderesse.

Selon la présente invention, la clé KEY est obtenue en soumettant le mot binaire extrait du réseau de paramètres physiques à un registre à décalage à rétroaction linéaire (Linear Shift Register).

Dans le mode de réalisation illustré par la figure 1, on prévoit n registres à décalage à rétroaction linéaire 6 (LSFR1, LSFRi, ..., LSFRn). Les sorties respectives des différents registres sont, par exemple, envoyées sur un sélecteur 7 (SEL) dont la sortie délivre la quantité secrète dans un élément de mémorisation temporaire 8 (REG2). En variante, le sélecteur 7 peut être situé en amont des registres 6 plutôt qu'en aval.

La sélection du registre à rétroaction linéaire utilisé, donc la commande du sélecteur 7, est effectuée sur la base d'un mot binaire de paramétrage généré par un compteur 9 (COUNT) qui conditionne donc la quantité secrète courante, c'est-à-dire utilisée tant qu'elle n'a pas été révoquée. Le sélecteur pourra être un multiplexeur, ou tout autre moyen classique adapté.

On incrémente le compteur à chaque fois que la donnée secrète doit être changée suite à une révocation de la donnée précédemment utilisée. On notera que le compteur 9 est modulo le nombre n de registres à décalage.

De préférence, la cellule 1 fait partie d'une zone sécurisée du circuit intégré 2. Par zone sécurisée on entend une zone protégée contre des attaques par mesure électrique directe. Par exemple, il peut s'agir d'une cellule noyée dans une résine dont la température de fusion entraînerait la destruction du circuit si un pirate tentait d'en détecter le contenu.

Selon un autre mode de réalisation non représenté, on utilise un seul registre à décalage à rétroaction linéaire dont on paramètre les bits dérivés. Cette caractéristique sera mieux comprise par la suite en relation avec les figures 2 et 3.

La cellule de génération 1 comprend en outre une unité centrale 12 (CU) de commande des différents éléments la constituant. L'unité centrale 12 communique, entre autres, avec le reste du circuit intégré, notamment pour recevoir les commandes de génération de la quantité secrète de façon préférentiellement éphémère lorsqu'elle est requise et pour recevoir les commandes nécessaires à la génération d'une nouvelle quantité secrète suite à une révocation, c'est-à-dire une commande déclenchant l'incrémentation (ou décrémentation) du compteur 9.

On notera que le système exploitant la quantité secrète ne traite que de la quantité secrète KEY et n'a pas besoin de connaître la manière dont celle-ci est générée. Ainsi, la cellule de génération selon l'invention est transparente pour l'exploitation faite de la quantité secrète et est donc compatible avec toute exploitation classique.

En variante, le compteur 9 est remplacé par une liste de codes de sélection du multiplexeur constituant le sélecteur 7. Ces codes sont stockés en mémoire non volatile dans une phase de paramétrage précédant toute utilisation.

Le recours à des registres à décalage à rétroaction linéaire constitue un moyen particulièrement avantageux et simple à mettre en oeuvre pour rendre une quantité secrète révocable ou, plus précisément, pour permettre un changement d'une quantité secrète d'un circuit intégré en cas de révocation d'une quantité précédente, tout en tirant bénéfice d'un identifiant issu d'un réseau de paramètres physiques et notamment le fait qu'un tel identifiant ne peut pas être piraté par mesure électrique.

La figure 2 représente le schéma bloc général d'un registre à décalage à rétroaction. Un tel registre est essentiellement composé de deux parties, un registre à décalage 20 et une fonction de rétroaction 21 (RETROACT). Le registre à décalage 20 constitue une succession de bits B1, B2, B3, ..., Bm-1, Bm à la manière de tout registre à décalage. Le rôle du bloc 21 constituant la fonction de rétroaction est de calculer le bit d'entrée du registre à décalage (le bit Bm) à partir d'une combinaison d'au moins une partie des bits contenus dans le registre, à chaque décalage de la succession de bits. Par conséquent, chaque bit du registre à décalage 20 peut être individuellement fourni à la fonction de rétroaction 21. La sortie du registre à décalage 20 est, sous une forme série, constituée par le bit B1 de poids le plus faible du mot binaire du registre. Dans un mode de réalisation à sortie parallèle, on prélève simultanément les valeurs de tous les bits du registre à décalage ou d'une partie de ces bits selon la taille du mot recherché.

Un avantage du recours à un registre à décalage est que sa réalisation est particulièrement simple. En guise de fonction de rétroaction, on pourra utiliser n'importe quelle fonction classique. On peut aussi envisager d'utiliser une fonction de rétroaction non linéaire pourvu que celle-ci permette de générer en sortie un mot reproductible. Toutefois, selon un mode préféré de réalisation de l'invention, on utilise une fonction de rétroaction linéaire qui est une combinaison de type OU exclusif de certains bits du registre à décalage. La liste de ces bits est généralement désignée par l'expression séquence de dérivation ou configuration de Fibonacci.

La période de répétition d'un mot binaire contenu dans le registre à décalage dépend non seulement du nombre de bits de ce registre mais également de la fonction de rétroaction utilisée. Dans un registre à décalage à rétroaction linéaire de m bits, on dispose de 2^{m}-1 séquences binaires distinctes. En d'autres termes, en chargeant les bits successifs fournis sur la sortie OUT dans un registre de taille adaptée, on peut obtenir des quantités secrètes ayant des tailles allant jusqu'à 2^{m}-1 bits. Cela constitue le mot le plus long avant répétition. Le fait d'utiliser un déchargement en série du code fourni par le registre à décalage à rétroaction linéaire permet d'allonger la quantité secrète par rapport à la longueur du mot fourni par le réseau de paramètres physiques.

La figure 3 représente, pour mieux en comprendre le fonctionnement, un registre à décalage à rétroaction linéaire simplifié de quatre bits dans lequel la séquence de dérivation est B1, B4. En d'autres termes, les bits B1 et B4, respectivement de poids le plus faible et le plus fort du mot contenu dans le registre 20' sur quatre bits sont combinés par une porte de type OU Exclusif 21' constituant la fonction de rétroaction. La sortie de la porte 21' constitue l'entrée du registre à décalage, donc l'entrée de la valeur B4. La séquence de sortie OUT est fournie par le bit de poids le plus faible (B1).

Les contenus successifs du registre 20' seront, en supposant une initialisation avec la valeur 1000, c'est-à-dire un chargement d'un état 1 dans le bit B4 après initialisation à 0 de tous les autres bits :

1000 ; 1100 ; 1110 ; 1111 ; 0111 ; 1011 ; 0101 ; 1010 ; 1101 ; 0110 ; 0011 ; 1001 ; 0100 ; 0010 ; 0001, avant de se répéter.

Le choix de la séquence de dérivation en fonction du nombre de combinaisons possibles avant répétition est à la portée de l'homme du métier en fonction de l'application. La réalisation d'un registre à décalage à rétroaction linéaire, que se soit sous forme matérielle ou logicielle, est parfaitement classique. On pourra se référer, par exemple, à l'ouvrage "Cryptographie appliquée" de Bruce Schneier édité par Wiley, deuxième édition, page 395 à 401.

Le mot issu du réseau 3 et servant à fixer la séquence initiale des registres 6 peut être chargé en série ou en parallèle dans ces derniers. En fixant le contenu initial d'un registre 6, le nombre de cycles de décalage qui est contrôlé par l'unité 12 et qui est de préférence prédéterminé conditionne, de façon reproductible, le mot final obtenu.

On voit bien qu'en changeant la séquence de dérivation (ce qui revient au même que de sélectionner un autre registre 6 de la série de n de la figure 1), on modifie le mot obtenu pour un même mot d'entrée (avec un même nombre de cycles de décalage supérieur à m). En variante, on peut changer le nombre de cycles de décalage pour changer de quantité secrète.

Un avantage de la présente invention est qu'elle permet de résoudre les problèmes de révocation des quantités secrètes obtenues à partir de mots binaires issus de réseaux de paramètres physiques sans pour autant donner les éléments de cette procédure anti-révocation au système d'exploitation des données. Par conséquent, la solution prévue par l'invention est particulièrement fiable et sure.

Un autre avantage de la présente invention est qu'elle permet d'utiliser un seul réseau de paramètres physiques tout en autorisant la révocation de certaines clés.

Un autre avantage de la présente invention est qu'elle préserve le caractère volatil (éphémère) des quantités secrètes basées sur l'extraction d'un mot issu de paramètres physiques.

Bien entendu, la présente invention est susceptible de diverses variantes et modifications qui apparaîtront à l'homme de l'art. En particulier, les longueurs des mots binaires utilisés dépendent de l'application et essentiellement des processus d'authentification auxquels est destiné le circuit intégré. A cet égard, on notera que l'invention est compatible avec les procédures d'exploitation existantes d'une quantité secrète fournie par un circuit intégré.

De plus, la réalisation pratique d'un registre à décalage à rétroaction qu'elle soit linéaire ou non est à la portée de l'homme du métier à partir des indications fonctionnelles données ci-dessus. Le choix entre le recours à plusieurs registres à décalage et le recours à un seul registre dont on sélectionne la séquence de dérivation au moyen de commutateurs, pourra s'effectuer par exemple, en fonction de ce que l'on souhaite privilégier entre les éléments de mémorisation et les registres à décalage.

En outre, le choix du nombre de cycles de décalage n'est pas critique pourvu qu'il reste le même pour une clé donnée. Lors d'un changement de clé suite à une révocation, on peut éventuellement fixer un autre nombre de cycles que ce soit pour continuer à utiliser la même séquence de dérivation ou non.

Enfin, bien que l'invention ait été décrite ci-dessus plus particulièrement en relation avec une réalisation matérielle, celle-ci pourra être mise en oeuvre de façon logicielle.

## Revendications

1. Procédé de génération d'une quantité secrète (KEY) à partir d'un identifiant d'un circuit intégré (2), **caractérisé en ce qu'**il comprend les étapes suivantes :
générer un premier mot numérique à partir d'un réseau de paramètres physiques (3) ; et
soumettre ce premier mot à au moins un registre à décalage à rétroaction (6), la sortie dudit registre à décalage constituant ladite quantité secrète.

2. Procédé selon la revendication 1, **caractérisé en ce qu'**il consiste à soumettre le premier mot à plusieurs registres à décalage à rétroaction (6), et à sélectionner l'un de ces registres pour constituer la quantité secrète (KEY).

3. Procédé selon la revendication 2, **caractérisé en ce que** la sélection est destinée à être modifiée suite à une révocation d'une quantité secrète précédente.

4. Procédé selon l'une quelconque des revendications 1 à 3, **caractérisé en ce que** le ou les registres à décalage (6) sont à rétroaction linéaire.

5. Procédé selon l'une quelconque des revendications 1 à 4, **caractérisé en ce qu'**il consiste à sélectionner un registre à décalage parmi plusieurs au moyen d'un sélecteur (7).

6. Circuit de génération d'une quantité secrète (KEY) interne à un circuit intégré (2) **caractérisé en ce qu'**il comporte :
un générateur (4) d'un premier mot numérique propre à la puce de circuit intégré basé sur un réseau de paramètres physiques (3) ;
au moins un registre à décalage à rétroaction (6) destiné à recevoir en entrée le premier mot et à fournir ladite quantité ; et
un sélecteur de la séquence de dérivation du registre à décalage, programmable au moyen d'un compteur (9).

7. Circuit de génération d'une quantité secrète (KEY) interne à un circuit intégré (2) **caractérisé en ce qu'**il comporte :
un générateur d'un premier mot numérique propre à la puce de circuit intégré et basé sur un réseau de paramètre physique (3) ;
plusieurs registres à décalage à rétroaction (6) destinés à recevoir en entrée le premier mot binaire ; et
un sélecteur (7) d'un des registres à décalage pour fournir ladite quantité secrète.

8. Circuit selon la revendication 6 ou 7, **caractérisé en ce que** la sélection opérée par le sélecteur est destinée à être modifiée en cas de révocation de quantité secrète.

9. Circuit selon la revendication 7, **caractérisé en ce que** le sélecteur (7) est constitué d'un multiplexeur de sélection d'une entrée ou sortie parmi les entrées/sorties des registres à décalage (6).

10. Circuit selon l'une quelconque des revendications 6 à 9, **caractérisé en ce que** des registres (5, 8) de stockage du premier mot et de la quantité secrète sont des registres temporaires, et **en ce que** le circuit comprend des moyens (12) pour réinitialiser ces éléments de mémorisation temporaire après une durée prédéterminée.
